# EUROPÄISCHE PATENTSCHRIFT

(11) **EP 3 728 800 B1**
(45) Veröffentlichungstag und Bekanntmachung des Hinweises auf die Patenterteilung: **26.07.2023**
(21) Anmeldenummer: 18826986.4
(22) Anmeldetag: 12.12.2018
(51) Int. Cl.: F01K 17/04, F01K 23/10, F22D 5/00, F01K 7/34

(54) **KRAFTWERK**
POWER PLANT
CENTRALE ÉLECTRIQUE

(30) Priorität: 22.12.2017 DE 102017223705
(43) Veröffentlichungstag der Anmeldung: 28.10.2020
(73) Patentinhaber: E.ON Energy Projects GmbH, 80992 München (DE)
(72) Erfinder: HERRMANN, Stephan, 81925 München (DE); SPLIETHOFF, Hartmut, 82140 Olching (DE)
(74) Vertreter: Glawe, Delfs, Moll
(86) Internationale Anmeldenummer: PCT/EP2018/084460
(87) Internationale Veröffentlichungsnummer: WO 2019/121191

(56) Entgegenhaltungen:
- EP-A1- 0 410 111
- DE-A1- 2 824 321
- DE-C1- 4 409 811
- US-A- 4 998 408
- US-A- 5 044 163
- US-A- 5 251 432

## Beschreibung

Die Erfindung betrifft ein Kraftwerk zur Generierung von elektrischer Energie und Entnahmedampf (Gas- und Dampf-Kraftwerk). Insbesondere ist das erfindungsgemäße Kraftwerk mit einer Gasturbine versehen und arbeitet nach der Kraft-Wärme-Kopplung. Bei dem Kraftwerk ist eine Menge des Entnahmedampfs maximiert. Somit lässt sich Brennstoff in der Gasturbine oder einer Zusatzfeuerung einsparen, da ein benötigter Prozessdampf unter weniger Energieaufwand bereitgestellt wird. Somit können sowohl die Betriebskosten des Kraftwerks als auch dessen CO2-Ausstoß gesenkt werden.

Aus dem Stand der Technik sind Gas- und Dampfkraftwerke mit Kraft-Wärme-Kopplung bekannt. Beispielsweise geht aus der US 5,044,163 A ein solches Kraftwerk hervor. Allerdings ist bei diesem Kraftwerk keine Entnahme von Prozessdampf vorgesehen. Aus dem Stand der Technik sind ebenfalls Kraftwerke bekannt, bei denen Prozessdampf entnehmbar ist. Typischerweise werden solche Kraftwerke spezifisch für industrielle Abnehmer von Strom und Wärme gebaut. Die Abgabe von Wärme erfolgt in Form von Prozessdampf. Vorteilhafterweise weisen die Abnehmer einen kontinuierlichen Bedarf an Energie auf. Bei solchen Kraftwerken ist eine Gasturbine vorhanden, deren Rauchgas zum Verdampfen von Speisewasser verwendet wird, wobei der so erzeugte Frischdampf eine Dampfturbine antreibt. Nach Durchlaufen der Dampfturbine ist der Restdampf dem Kraftwerk als Prozessdampf entnehmbar und kann für weitere Prozesse eingesetzt werden.

Andere Kraftwerke sind beispielsweise aus der DE 199 44 920 B4 oder der DE 28 24 321 A1 bekannt. Außerdem beschreibt die DE 712 163 A ein weiteres Kraftwerk.

Bei bekannten Kraftwerken kann insbesondere bei geringen Temperaturen des Rauchgases dessen Wärme nicht optimal verwendet werden, so dass die Wärme des Rauchgases verloren geht. Dies führt zu einem verminderten Wirkungsgrad des gesamten Kraftwerks.

Es ist daher Aufgabe der Erfindung, einen Wirkungsgrad eines Gas- und Dampfkraftwerks zu verbessern.

Gelöst wird die Aufgabe durch die Merkmale des unabhängigen Anspruchs. Die Unteransprüche haben bevorzugte Weiterbildungen der Erfindung zum Inhalt.

Die Aufgabe wird somit gelöst durch ein Kraftwerk zur Generierung von elektrischer Energie und Prozessdampf. Das Kraftwerk umfasst eine Gasturbine, eine Dampfturbine und einen AbhitzeDampferzeuger. Der Abhitze-Dampferzeuger ist mindestens einstufig ausgebildet und kann insbesondere aber auch mehrstufig ausgebildet sein. Die Gasturbine dient zum Antreiben eines ersten Generators zum Generieren von elektrischer Energie durch Verbrennung eines Brennstoffs zu Rauchgas. Die Dampfturbine dient zum Antreiben eines zweiten Generators. Die Dampfturbine weist zumindest eine erste Stufe, insbesondere eine Hochdruckstufe, auf, um einen Frischdampf zu einem Restdampf zu wandeln. Auf diese Weise wird dem Frischdampf Energie entzogen, um den Generator anzutreiben. Der Restdampf stellt zumindest einen Teil des Prozessdampfs dar, der dem Kraftwerk entnommen werden kann. Somit wird insbesondere der gesamte Restdampf oder zumindest ein Teil des Restdampfes als Prozessdampf dem Kraftwerk entnommen. Der Abhitzedampferzeuger dient zum Erzeugen des Frischdampfs aus Frischwasser mittels einer Abwärme des Rauchgases. Das Frischwasser ist dem Kraftwerk entweder zuführbar, insbesondere um entnommenen Prozessdampf auszugleichen, und/oder kann aus einem Teil des Restdampfs gewonnen werden, indem dieser kondensiert wird. Der Abhitzedampferzeuger umfasst insbesondere mehrere Wärmetauscher, um das Frischwasser zu dem Frischdampf zu wandeln. Es ist vorgesehen, dass der Restdampf einen Restdampfdruck aufweist, der geringer als ein Frischdampfdruck des Frischdampfs ist. Somit weist der Frischdampf eine höhere Energie auf als der Restdampf, die in der Dampfturbine zum Antreiben des zweiten Generators verwendet werden kann. Die Dampfturbine kann lediglich die erste Stufe, insbesondere die Hochdruckstufe, aufweisen. In diesem Fall ist die Dampfturbine einstufig ausgebildet. Alternativ kann die Dampfturbine auch eine zusätzliche zweite Stufe, insbesondere eine Niederdruckstufe, aufweisen. In diesem Fall ist die Dampfturbine zweistufig ausgebildet.

Es ist vorgesehen, dass der Abhitzedampferzeuger einen Vorwärmer und einen Verdampfer aufweist. Der Vorwärmer dient zum Vorwärmen des Frischwassers zu Speisewasser. Der Verdampfer dient zum Verdampfen des Speisewassers zu dem Frischdampf. Dabei ist insbesondere vorgesehen, dass der Vorwärmer und der Verdampfer jeweils einen Wärmetauscher umfassen, die in einen Strom des Rauchgases eingebracht sind. Der Verdampfer ist dabei an einer heißeren Stelle des Stroms des Rauchgases angeordnet als der Vorwärmer. Das Speisewasser weist insbesondere einen Speisewasserdruck auf, der höher als der Restdampfdruck ist. Der Speisewasserdruck wird insbesondere durch eine Pumpeneinheit gebaut, durch die Frischwasser durch den Vorwärmer pumpbar ist. Besonders vorteilhaft handelt es sich bei dem Speisewasserdruck um einen Druck zwischen 50 bar und 150 bar, bevorzugt zwischen 80 bar und 120 bar, besonders um 100 bar. Bei dem Restdampfdruck handelt es sich insbesondere um einen Druck zwischen 1 bar und 10 bar, insbesondere zwischen 3 bar und 7 bar, besonders bevorzugt um 5 bar. Bei dem Frischdampfdruck handelt es sich bei Volllast insbesondere um den Speisewasserdruck abzüglich 2 bar bis 5 bar Druckverlust, bei einem Teillastbetrieb insbesondere um einen Druck zwischen 10 bar und 20 bar, insbesondere zwischen 13 bar und 17 bar, besonders bevorzugt um 15 bar.

Das Kraftwerk weist ferner ein Drosselventil oder mehrere, stufenweise Drosselventile sowie bevorzugt zumindest einen Wasserabscheider auf. Das zumindest eine Drosselventil ist zum Entspannen eines Teils des Speisewassers ausgebildet. Dabei kann das Drosselventil entweder ausgebildet sein, den Teil des Speisewassers auf den Restdampfdruck zu entspannen, oder alternativ auf einen Antriebsdampfdruck. Im Falle des Entspannens auf den Restdampfdruck wird ein Zusatzdampf generiert, der denselben Dampfdruck aufweist wie der Prozessdampf. Somit kann der Zusatzdampf ebenso wie der Prozessdampf dem Kraftwerk entnommen werden, um eine Dampfentnahme zu erhöhen. Im Falle des Entspannens auf den Antriebsdampfdruck wird ein Antriebsdampf generiert. Der Antriebsdampf dient insbesondere zum Betreiben einer zweiten Stufe der Dampfturbine. Der Antriebsdampfdruck ist geringer als der Restdampfdruck. Insbesondere handelt es sich bei dem Antriebsdampfdruck um einen Druck zwischen 0,1 bar und 3 bar, insbesondere zwischen 0,3 bar und 0,7 bar, besonders bevorzugt um 0,5 bar. Befindet sich das Kraftwerk in einem Teillastbetrieb, so ist der Antriebsdampfdruck insbesondere geringer als bei Volllastbetrieb. Der Antriebsdampfdruck ist bei Teillastbetrieb bevorzugt erheblich geringer als bei Volllastbetrieb. Die zweite Stufe der Dampfturbine ist insbesondere eine Niederdruckstufe, weswegen der geringere Antriebsdampfdruck ausreicht, um die Dampfturbine anzutreiben, insbesondere bei Mindestmassenstrom. Es muss somit kein Restdampf, der aus der ersten Stufe ausgegeben wird, zum Antreiben der zweiten Stufe verwendet werden. Vielmehr ist ermöglicht, dass der gesamte Restdampf als Prozessdampf ausgegeben werden kann.

Durch das erfindungsgemäße Kraftwerk ist, insbesondere im Teillastbetrieb ein Wirkungsgrad erheblich vergrößert. Dies geschieht dadurch, dass eine Dampfauskopplung aus dem Kraftwerk erhöht ist, indem die Menge an Prozessdampf vergrößert wird. Dies wird dadurch erreicht, dass entweder zusätzlich zu dem Restdampf auch der Zusatzdampf als Prozessdampf entnommen wird oder dadurch, dass eine zweite Stufe der Dampfturbine nicht oder nur vermindert mit dem Restdampf aus der ersten Stufe betrieben werden muss, wodurch ein größerer Anteil des Restdampfs als Prozessdampf entnommen werden kann. Da das Kraftwerk vorsieht, dass Speisewasser vor dem Verdampfen entnommen wird, kann ein höherer Durchfluss durch den Vorwärmer realisiert werden, ohne dass die Dampferzeugung nennenswert beeinflusst wird. Durch den höheren Durchfluss von Frischwasser durch den Vorwärmer erfolgt eine verbesserte Abkühlung des Rauchgases, so dass die Wärmeenergie des Rauchgases auch bei geringeren Temperaturen optimal verwendet werden kann. Dies führt zu einem erhöhten Wirkungsgrad des Kraftwerks. Insbesondere ist eine Regelvorrichtung vorhanden, bei der der Massestrom des Frischwassers und der Durchfluss des Speisewassers durch das Drosselventil derart geregelt wird, dass der Durchfluss durch den Verdampfer von der Maßnahme unbeeinflusst bleibt und gleichzeitig eine optimale Auskühlung des Rauchgases erfolgt. Eine optimale Auskühlung des Rauchgases liegt insbesondere dann vor, wenn das Rauchgas bis auf 100°C, bevorzugt bis auf 90°C, abgekühlt wird. Besonders vorteilhaft erfolgt die Auskühlung bis an einen Schwefelsäuretaupunkt oder bis an einen vordefinierten Toleranzbereich um den Schwefelsäuretaupunkt, wobei der Schwefelsäuretaupunkt insbesondere nicht unterschritten wird, um Korrosion zu vermeiden.

In einer bevorzugten Ausführungsform ist vorgesehen, dass das Drosselventil ein Zusatzdampf-Drosselventil ist. Das Zusatzdampf-Drosselventil dient zum Entspannen des Teils des Speisewassers auf den Restdampfdruck zur Generierung des Zusatzdampfs. Somit ist vorgesehen, dass nach dem Entspannen des Teils des Speisewassers auf den Restdampfdruck der Zusatzdampf aus dem Kraftwerk entnommen wird. Der Zusatzdampf wird dazu mit dem Restdampfdruck zu dem Prozessdampf gemischt. Das Kraftwerk ist somit ausgelegt, dass der Zusatzdampf mit dem Restdampf zu dem Prozessdampf mischbar ist. Somit wird die Menge des Prozessdampfs, die aus dem Kraftwerk entnommen werden kann, erhöht. Da die vergrößerte Menge des Prozessdampfes daraus resultiert, dass ein höherer Massenstrom durch den Vorwärmer fließt, ist außerdem ermöglicht, das Rauchgas auf eine niedrige Temperatur abzukühlen. Insbesondere wird das Rauchgas auf eine niedrigere Temperatur als im Stand der Technik abgekühlt, wodurch eine größere Menge Wärmeenergie aus dem Rauchgas entzogen wird. Damit kann die vorhandene Energie des Rauchgases besser als im Stand der Technik genutzt werden.

In einer weiteren bevorzugten Ausführungsform ist vorgesehen, dass die Dampfturbine zweistufig ausgebildet ist. Somit weist die Dampfturbine neben der zuvor beschriebenen ersten Stufe eine zweite Stufe auf. Die zweite Stufe ist insbesondere eine Niederdruckstufe und dient zum Wandeln eines Antriebsdampfes zu einem Verlustdampf. Der Verlustdampf ist lediglich zum Kondensieren vorgesehen und wird insbesondere nicht weiter verwendet. Der Antriebsdampf ist vorteilhafterweise durch Entspannen von Restwasser aus dem Zusatzdampf an einem Antriebsdampf-Drosselventil erzeugbar. Insbesondere entspricht der so erzeugte Antriebsdampf dem zuvor beschriebenen Antriebsdampf, wobei in diesem Ausführungsbeispiel der Antriebsdampf nicht aus dem Speisewasser direkt, sondern aus dem Restwasser des Zusatzdampfes erzeugt wird. Dazu wird das Restwasser von dem Zusatzdampf abgeschieden und durch das Antriebsdampf-Drosselventil erneut entspannt. Da der Antriebsdampfdruck geringer als der Restdampfdruck ist, ist ein solches Entspannen möglich, um die zweite Stufe, insbesondere die Niederdruckstufe, der Dampfturbine zu betreiben. Die zweite Stufe, insbesondere die Niederdruckstufe, weist typischerweise einen Mindestmassenstrom auf, der zur Vermeidung der Ventilation nicht unterschritten werden darf. Beispielsweise darf die Grenze von 10% des Massenstroms nicht unterschritten werden. Dieser Mindestmassenstrom wird im Stand der Technik üblicherweise aus dem Restdampf abgezweigt und kann somit nicht für den Prozessdampf verwendet werden. Wird die zweite Stufe mit dem Mindestmassenstrom betrieben, so liegt allerdings an deren Eingang aufgrund des Stodola-Gesetzes bereits ein niedriger Druck vor, da ein niedriges Druckgefälle über die zweite Stufe der Turbine vorherrscht. Wie bereits beschrieben, ist der Antriebsdampfdruck geringer als der Restdampfdruck, so dass im Stand der Technik der Restdampf stark gedrosselt werden muss, um den Antriebsdampfdruck zu erreichen. Daher ist der Mindestmassestrom optimal aus dem Zusatzdampf zu gewinnen, so dass der Restdampf nicht zum Antreiben der zweiten Stufe verwendet werden muss. Dies führt insbesondere im Teillastbetrieb zu einer erheblichen Steigerung des Wirkungsgrads des Kraftwerks. Unterstützt wird dies insbesondere dadurch, dass der Vorwärmer für den Volllastbetrieb auszulegen ist, wodurch der Vorwärmer im Teillastbetrieb überdimensioniert ist. Dies wird durch den höheren Frischwasserstrom durch den Vorwärmer zur Generierung des Zusatzdampfes und/oder Antriebsdampfes ausgenutzt.

In einer alternativen Ausführungsform zu den zuvor beschriebenen Ausführungsformen ist vorgesehen, dass die Dampfturbine wiederum zweistufig ausgebildet ist, wobei die zweite Stufe, insbesondere eine Niederdruckstufe, zum Wandeln des Antriebsdampfes zu einem Verlustdampf ausgebildet ist. Wiederum ist der Verlustdampf zum Kondensieren vorgesehen und wird insbesondere nicht weiter verwendet. Der Antriebsdampf wird vorteilhafterweise durch das Drosselventil, das ein Antriebsdampf-Drossel-Ventil ist, generiert. Dies geschieht dadurch, dass der Teil des Speisewassers auf den Antriebsdampfdruck entspannt wird, wodurch durch das Antriebsdampf-Drosselventil der Antriebsdampf generiert wird. In diesem Fall erfolgt kein Generieren von Zusatzdampf, so dass der Restdampf den gesamten Prozessdampf darstellt. Da allerdings kein Restdampf zum Antreiben der zweiten Stufe verwendet werden muss, sondern die zweite Stufe vielmehr durch den Antriebsdampf angetrieben wird, kann der gesamte Restdampf den Prozessdampf darstellen. Insbesondere treten dieselben Vorteile wie in den vorherigen Ausführungsbeispielen auf. Somit wird wiederum erreicht, dass durch eine Vergrößerung des Massenstroms durch den Vorwärmer die Menge an Speisewasser erhöht wird, wobei ein Teil des Speisewassers zu Antriebsdampf gewandelt wird, um die zweite Stufe der Dampfturbine zu betreiben. Dies führt wiederum zu einer Steigerung des Wirkungsgrads des Kraftwerks, da das Rauchgas auf niedrigere Temperaturen abgekühlt werden kann, um somit eine vorhandene Wärmemenge des Rauchgases optimal zu nutzen. Ein Vorteil dieser Ausführungsform ist insbesondere die vereinfachte Schaltung.

In einem Betriebspunkt, in dem nur wenig Prozessdampf benötigt wird, kann der elektrische Wirkungsgrad des Kraftwerks, insbesondere mit einer einstufigen Dampfturbine, gegenüber einem herkömmlichen Kraftwerk ohne Zusatzdampfdrosselventil gesteigert werden, indem vorteilhafterweise der Prozessdampf komplett durch den Zusatzdampf und somit über das Zusatzdampfdrosselventil bereitgestellt wird. Es erfolgt somit keine Ausgabe von Restdampf als Prozessdampf. Der gesamte Restdampf kann somit über einen Bypass abgeführt, insbesondere in den Kondensator geleitet werden. Dadurch kann der Restdampf einen wesentlich niedrigeren Druck als einen geforderten Prozessdampfdruck aufweisen, wodurch die Leistungsabgabe der Dampfturbine gesteigert wird.

Das Kraftwerk weist vorteilhafterweise eine Speisewasserpumpvorrichtung auf. Die Speisewasserpumpvorrichtung dient zum Fördern von Frischwasser durch den Vorwärmer und zum Generieren des Speisewasserdrucks. Die Speisewasserpumpvorrichtung umfasst zumindest eine Pumpe, vorteilhafterweise zwei oder mehrere Pumpen. In dem Kraftwerk ist üblicherweise lediglich eine einzige Pumpe der Speisewasserpumpvorrichtung aktiv, während die übrigen Pumpen als Ersatz vorgehalten werden. Während einer Entnahme von Speisewasser durch Entspannen des Speisewassers an dem Drosselventil ist ein höherer Massenstrom durch die Speisewasserpumpvorrichtung vonnöten als ohne eine solche Entnahme. Daher kann vorteilhafterweise während der Entnahme und des Entspannens des Speisewassers an dem Drosselventil die als Ersatz vorgehaltene zweite oder weitere Pumpe zur Erhöhung des Massenstroms durch den Vorwärmer verwendet werden.

Vorteilhafterweise ist vorgesehen, dass der Abhitzedampferzeuger eine Dampftrommel aufweist. Die Dampftrommel dient zum Trennen von Frischdampf und Speisewasser. Aus der Dampftrommel ist der Frischdampf der Dampfturbine zuführbar, wobei der Frischdampf vor dem Zuführen durch die Dampfturbine in einem Erhitzer vorteilhafterweise überhitzt wird. Der Überhitzer ist insbesondere an einer heißesten Stelle des Stroms des Rauchgases angebracht. Weiterhin ist der Dampftrommel das Speisewasser aus dem Vorwärmer zuführbar. So dient insbesondere die Dampftrommel zum Abscheiden des Speisewasser aus dem Frischdampf. Insbesondere kann das Speisewasser an einer beliebigen Stelle zwischen der Dampftrommel und dem Vorwärmer, besonders bevorzugt auch an einer beliebigen Stelle des Vorwärmers, entnommen und durch das Drosselventil entspannt werden.

Besonders vorteilhaft ist vorgesehen, dass der Abhitzedampferzeuger eine Förderpumpe zum Fördern von Speisewasser aus der Dampftrommel durch den Verdampfer zurück in die Dampftrommel aufweist. Somit ist aus dem Speisewasser Frischdampf generierbar. In der Dampftrommel wird der generierte Frischdampf von restlichem Speisewasser getrennt, so dass ausschließlich Frischdampf ohne das Speisewasser der Dampfturbine zuführbar ist.

Das Kraftwerk weist weiterhin vorteilhafterweise einen Zusatzdampf-Abscheidebehälter auf. Alternativ oder zusätzlich weist das Kraftwerk vorteilhafterweise einen Antriebsdampf-Abscheidebehälter auf. Der Zusatzdampf-Abscheidebehälter dient zum Abscheiden von Restwasser aus dem Zusatzdampf. Der Antriebsdampf-Abscheidebehälter dient zum Abscheiden von Restwasser aus dem Antriebsdampf. Somit lassen sich durch die jeweiligen Abscheidebehälter der Zusatzdampf bzw. der Antriebsdampf von dem Restwasser, das an dem entsprechenden Drosselventil nicht verdampft ist, trennen. Das Restwasser, das aus dem Zusatzdampf abgeschieden wurde, lässt sich insbesondere erneut entspannen, um den Antriebsdampf zu erzeugen. Das Restwasser, das aus dem Antriebsdampf abgeschieden wurde, wird insbesondere kondensiert oder abgekühlt und als Frischwasser dem Vorwärmer erneut zugeführt. Insgesamt kann das jeweilige Restwasser je nach Druckniveau in einem Kondensator, sowie vor, in oder nach dem Entgaser in das Speisewasser zurückgegeben werden. In letzterem Fall muss der Druck insbesondere größer als 1 bar sein, wodurch der Entgaser beheizt werden kann. Das noch heiße Restwasser kann in diesem Fall den Wärmebedarf des Entgasers zumindest teilweise decken. Durch eine variable Aufteilung des Restwassers auf eine Zuführung in den Kondensator und nach dem Kondensator kann die Eintrittstemperatur in den Vorwärmer geregelt werden, so dass insbesondere der Schwefelsäuretaupunkt am Austritt des Abhitzedampferzeugers nicht unterschritten wird. Nicht verdampftes Restwasser kann insbesondere in einem Wärmetauscher zur Brenngasvorwärmung genutzt werden. Ebenso kann bevorzugt das nicht verdampfte Restwasser nach Druckerhöhung in einer Pumpe durch Einspritzung in das Brenngas zur effizienten Vorwärmung mit Dampfsättigung im Brenngas genutzt werden, was zu einer Emissionsreduktion und zu einer Leistungssteigerung führt. Somit kann die Energie des Restwassers optimal verwendet werden, um den Wirkungsgrad des Kraftwerks weiter zu erhöhen.

Das Kraftwerk weist außerdem vorteilhafterweise einen Bypass auf. Über den Bypass ist der Restdampf von einem Ausgang der Dampfturbine zu einem Kondensator oder von einem Ausgang der ersten Stufe zu einem Eingang der zweiten Stufe überführbar. Somit kann insbesondere solcher Restdampf, der nicht als Prozessdampf entnommen wird, abgeführt werden.

Das Drosselventil ist vorteilhafterweise an einem Ausgang des Vorwärmers angebracht. Somit wird das Speisewasser bevorzugt an einem Ausgang des Vorwärmers, d.h., an einer heißesten Stelle des Vorwärmers, entnommen. Alternativ kann das Drosselventil an einem beliebigen anderen Punkt des Vorwärmers angebracht sein. Insbesondere ist vorgesehen, dass der Vorwärmer einen ersten Vorwärmbereich und einen zweiten Vorwärmbereich aufweist, die hintereinander geschaltet sind und zwischen denen das Drosselventil angebracht ist. In diesem Fall wird das Speisewasser aus der Mitte des Vorwärmers entnommen.

Durch das erfindungsgemäße Kraftwerk ist ermöglicht, die Wahl des Frischdampfdrucks unabhängig von dem Massestrom von dem Vorwärmer auszugestalten. Insbesondere ist für das Ausbilden der Eigenschaften des Frischdampfes eine Temperatur oberhalb des Pinch-Points (auch Zwickpunkt genannt) maßgeblich, während die Erhöhung des Massenstroms durch den Vorwärmer lediglich Auswirkungen auf den Bereich unterhalb des Pinch-Points umfasst. Insbesondere kann auch eine Auskühlung des Rauchgases, vorteilhafterweise bei aktiver Zusatzfeuerung, durch Anpassung des Massenstroms durch den Vorwärmer, optimiert werden.

Der zusätzliche Massestrom durch den Vorwärmer kann in einer bevorzugten Ausführungsform zwischen 0% und 200% des ursprünglich für die Herstellung des Frischdampfs vorgesehenen Massenstroms betragen. In einer besonders vorteilhaften Ausführungsform beträgt dieser Massestrom zwischen 20% und 50% des für die Herstellung des Frischdampfes ursprünglich vorgesehenen Massestroms. Insbesondere wird der Durchfluss durch den Vorwärmer für jeden Betriebspunkt derart angepasst, dass eine optimale Auskühlung des Rauchgases erfolgt, während gleichzeitig der Massestrom durch den Verdampfer von dem Strom durch den Vorwärmer nicht beeinflusst wird.

Vorteilhafterweise weist das Kraftwerk eine Hochdruckumleitung auf. Das bedeutet, dass die Dampfturbine, insbesondere eine Hochdruckturbine, über einen zusätzlichen, alternativen Umgehungs-Pfad mit eigenem Drosselventil und Einspritzkühlung umgangen wird, wodurch die Menge des Restdampfes vergrößert wird, um somit die Menge an Prozessdampf zu vergrößern. Die Hochdruckumleitung umfasst insbesondere eine Drossel und/oder eine Heißwassereinspritzung, um den Frischdampf, der über die Hochdruckumleitung an der Dampfturbine vorbei geleitet wird, auf den Restdampfdruck zu entspannen und mit dem Restdampf zu mischen. Alternativ oder zusätzlich kann eine Zusatzfeuerung vorgesehen sein. Die Zusatzfeuerung ermöglicht ein zusätzliches Erwärmen des Rauchgases nach Austritt aus der Gasturbine. Somit steht eine größere Wärmemenge für den Abhitzedampferzeuger zur Verfügung. Durch alles diese Maßnahmen lässt sich die erzeugte Menge an Prozessdampf maximieren.

Bevorzugt ist vorgesehen, dass das Drosselventil zur Generierung des Zusatzdampfs und/oder Antriebsdampfs eingerichtet ist, eine solche Menge an Speisewasser zu entspannen, um eine vordefinierte Auskühlung des Rauchgases in allen Lastpunkten zu erreichen. Dadurch wird die Menge an Speisewasser, das durch das Drosselventil entnommen wird, danach geregelt, welche Auskühlung des Rauchgases erreicht werden soll. Somit findet stets eine optimale Auskühlung des Rauchgases statt.

Ebenso ist vorteilhaft, dass das Drosselventil eingerichtet ist, das Speisewasser nur im Teillastbetrieb des Kraftwerks zu entspannen. Somit findet die Entnahme von Speisewasser an dem Drosselventil nur dann statt, wenn das Kraftwerk im Teillastbetrieb arbeitet. Gerade im Teillastbetrieb hat das Generieren von Antriebsdampf oder Zusatzdampf eine hohe Auswirkung auf den Wirkungsgrad des Kraftwerks.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Abbildung eines Kraftwerks gemäß einem ersten Ausführungsbeispiel der Erfindung,
- Fig. 2: eine schematische Ansicht eines Q-T-Diagramms des Kraftwerks gemäß dem ersten Ausführungsbeispiel der Erfindung,
- Fig. 3: eine schematische Ansicht eines Kraftwerks gemäß einem zweiten Ausführungsbeispiel der Erfindung,
- Fig. 4: eine schematische Ansicht eines Kraftwerks gemäß einem dritten Ausführungsbeispiel der Erfindung, und
- Fig. 5: eine schematische Ansicht eines Kraftwerks gemäß einem vierten Ausführungsbeispiel der Erfindung.

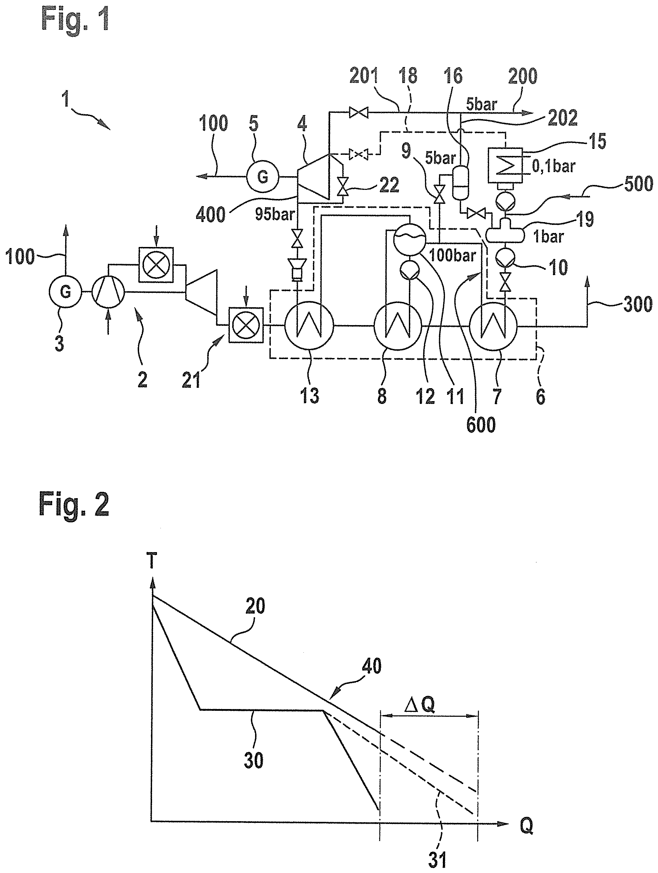

Fig. 1 zeigt schematisch ein Kraftwerk 1 gemäß einem ersten Ausführungsbeispiel der Erfindung. Das Kraftwerk 1 ist ein Gas- und Dampfkraftwerk mit Kraft-Wärme-Kopplung und umfasst eine Gasturbine 2 sowie eine Dampfturbine 4. Die Gasturbine 2 dient zum Antreiben eines ersten Generators 3, durch den elektrische Energie 100 ausgebbar ist. Die Dampfturbine 4 dient zum Antreiben eines zweiten Generators 5, durch den ebenfalls elektrische Energie 100 ausgebbar ist.

Durch den Betrieb der Gasturbine 2 wird Rauchgas 300 generiert, das in einem Abhitzedampferzeuger 6 abgekühlt wird, um eine Abwärme des Rauchgases 300 verwenden zu können. Zwischen der Gasturbine 2 und dem Abhitzedampferzeuger 6 kann insbesondere eine Zusatzfeuerung 21 vorhanden sei, um das Rauchgas 300 zusätzlich zu erwärmen. Der Abhitzedampferzeuger 6 umfasst einen Vorwärmer 7, einen Verdampfer 8 und einen Überhitzer 13, die zum Wärmetauschen vorgesehen sind. Es wird dazu Frischwasser 500 von extern zugeführt oder über einen Entgaser 19 aus kondensiertem Dampf des Kraftwerks 1 gewonnen. Das Frischwasser 500 wird durch eine Speisewasserpumpvorrichtung 10 durch den Vorwärmer 7 gefördert und gespannt, wodurch Speisewasser 600 unter einem Speisewasserdruck bereitgestellt wird. Das Speisewasser 600 wird in eine Dampftrommel 11 überführt. In dem in Fig. 1 gezeigten Beispiel beträgt der Speisewasserdruck 100 bar. Von der Dampftrommel 11 wird das Speisewasser 600 über eine Förderpumpe 12 durch den Verdampfer 8 gefördert. Dies führt dazu, dass der Verdampfer 8 das Speisewasser 600 zumindest teilweise verdampft, wobei ein so generierter Frischdampf 400 erneut der Dampftrommel 11 zugeführt wird. In der Dampftrommel 11 erfolgt ein Abscheiden des Frischdampfes 400 von dem Speisewasser 600. Der Frischdampf 400 wird durch den Überhitzer 13 überhitzt und anschließend der Dampfturbine 4 zugeführt. Die Dampfturbine 4 entzieht dem Frischdampf 400 Energie und treibt mit dieser Energie den zweiten Generator 5 an, so dass an einem Ausgang der Dampfturbine 4 ein Restdampf 201 ausgegeben wird. Der Restdampf 201 weist einen Restdampfdruck auf, der in dem in Fig. 1 gezeigten Ausführungsbeispiel 5 bar beträgt und damit insbesondere geringer als ein Frischdampfdruck von beispielsweise 95 bar ist. Es kann insbesondere auch eine Hochdruckumleitung 22 vorhanden sein. Das bedeutet, dass die Dampfturbine 4 über einen alternativen Umgehungs-Pfad mit Drossel und insbesondere auch Einspritzkühlung durch Heißwassereinspritzung (nicht gezeigt) umgangen wird, um eine größere Menge an Restdampf 201 zu generieren.

Um die Dampfturbine 4 anzutreiben, erfolgt somit zunächst ein Vorwärmen des Frischwassers 500 im Vorwärmer 7, um das Speisewasser 600 zu erhalten, anschließend ein Verdampfen des Speisewassers 600 zu Frischdampf 400 im Verdampfer 8 und zuletzt ein Überhitzen des Frischdampfs 400 im Überhitzer 13. Daher ist insbesondere vorgesehen, dass der Überhitzer 13 an der heißesten Stelle eines Stroms des Rauchgases 300 angeordnet ist, der Verdampfer 8 hinter dem Überhitzer 13 und der Vorwärmer 7 hinter dem Verdampfer 8 und damit an einer kältesten Stelle des Stroms des Rauchgases 300.

Des Weiteren ist vorgesehen, dass ein Zusatzdampfdrosselventil 9 vorhanden ist. Das Zusatzdampf-Drosselventil 9 ist zwischen der Dampftrommel 11 und dem Vorwärmer 7 angeordnet und dient zum Entnehmen von Speisewasser 600. Das Speisewasser 600 wird in dem Zusatzdampf-Drosselventil 9 auf den Restdampfdruck, d.h., in dem in Fig. 1 gezeigten Ausführungsbeispiel auf 5 bar, entspannt und einen Zusatzdampf-Abscheidebehälter 16 zugeführt. Der Zusatzdampf-Abscheidebehälter 16 dient zum Abscheiden von Restwasser aus dem Zusatzdampf 202, wobei der Zusatzdampf 202 mit dem Restdampf 201 gemischt wird, um so den Prozessdampf 200, der dem Kraftwerk 1 entnehmbar ist, zu erzeugen. Ein solches Mischen ist problemlos möglich, da durch das Zusatzdampf-Drosselventil 9 der Zusatzdampf 202 denselben Druck aufweist wie der Restdampf 201. Das Restwasser, das in dem Zusatzdampf-Abscheidebehälter 16 abgeschieden wurde, wird insbesondere dem Entgaser 19 zugeführt, um somit erneut als Speisewasser 600 verwendet werden zu können.

Durch das Abzweigen von Speisewasser 600 an dem ZusatzdampfDrosselventil 9 ist naturgemäß eine größere Menge an Speisewasser 600 notwendig, als ohne eine solche Abzweigung. Dies bedeutet, dass der Massestrom durch den Vorwärmer 7 mit Abzweigung von Speisewasser 600 größer ist als ohne Abzweigung von Speisewasser 600. Somit erfolgt ein stärkeres Auskühlen des Rauchgases 300, wodurch die Wärmeenergie des Rauchgases 300, insbesondere bei niedrigen Temperaturen, optimal verwendet werden kann. Insbesondere wird die Energie des Rauchgases 300 dazu verwendet, zusätzlich zu dem Restdampf 201 Zusatzdampf 202 zu produzieren, so dass die gesamte Menge an ausgebbarem Prozessdampf 200 vergrößert ist. Dadurch ist ein Wirkungsgrad des Kraftwerks 1 verbessert. Insbesondere ist im Teillastbetrieb der Vorwärmer 7 überdimensioniert, da dieser für den Volllastbetrieb auszulegen ist. Somit kann die Kapazität des Vorwärmers 7 dadurch ausgeschöpft werden, dass zusätzliches Speisewasser 600 generiert wird, das durch das Zusatzdampf-Drosselventil 9 zu Zusatzdampf 202 entspannt wird.

Falls nicht der gesamte erzeugte Prozessdampf 200 benötigt oder entnommen wird, wird der Restdampf 201 ganz oder teilweise in einem Kondensator 15 kondensiert. Dazu ist ein Bypass 18 vorgesehen, durch den der Ausgang der Dampfturbine 4 mit dem Kondensator 15 verbunden ist. Von dem Kondensator 15 erfolgt eine Übergabe des kondensierten ursprünglichen Restdampfs 201 an den Entgaser 19.

Das Zusatzdampf-Drosselventil 9 ist insbesondere steuerbar. So kann eine Entnahme von Speisewasser 600 geregelt werden, was insbesondere zur Folge hat, dass auch eine Durchflussmenge durch den Vorwärmer 7 geregelt werden kann. So lässt sich ein Durchfluss durch den Vorwärmer 7 derart einstellen, dass einerseits der Massenstrom durch den Verdampfer 8 nicht beeinflusst wird, gleichzeitig auch das Rauchgas 300 optimal ausgekühlt wird. Insbesondere wird das Rauchgas 300 auf eine niedrige Resttemperatur oberhalb eines Schwefelsäuretaupunkts, beispielsweise auf eine Resttemperatur von 90°C abgekühlt.

In einem Betriebspunkt, in dem nur wenig Prozessdampf benötigt wird, kann der elektrische Wirkungsgrad des Kraftwerks 1 gegenüber einem herkömmlichen Kraftwerk ohne Zusatzdampfdrosselventil 9 gesteigert werden, indem der Prozessdampf 200 komplett durch den Zusatzdampf 202 und somit über das Zusatzdampfdrosselventil 9 bereitgestellt wird. Es erfolgt somit keine Ausgabe von Restdampf 201 als Prozessdampf. Der gesamte Restdampf 201 kann somit über den Bypass 18 in den Kondensator 15 geleitet werden und dadurch einen wesentlich niedrigeren Druck als den Prozessdampfdruck aufweisen, wodurch die Leistungsabgabe der Dampfturbine 4 gesteigert wird.

Fig. 2 zeigt schematisch ein Q-T-Diagramm des in dem Kraftwerk 1 gemäß dem ersten Ausführungsbeispiel ablaufenden Prozesses. Dabei zeigt die Ordinate den Temperaturwert T des Rauchgases 300 und die Abszisse die aus dem Rauchgas 300 entnommene Wärmemenge Q. Es ist eine maximale Energie 20 des Rauchgases 300 als linearer Verlauf dargestellt. Der Verlauf 30 zeigt die entnommene Wärmemenge gemäß dem Prozess des Kraftwerks 1. Dabei ist der Vorteil durch die zusätzliche Entnahme von Speisewasser 600 an dem Zusatzdampf-Drosselventil 9 als gestrichelter Alternativverlauf 31 eingezeichnet.

Charakteristisch für Q-T-Diagramme ist der Pinch-Point 40. An diesem Punkt weist der Verlauf 30 den geringsten Abstand zu der maximalen Energie 20 auf, wobei dieser Abstand insbesondere auf etwa 10°C ausgelegt ist. Es ist in Fig. 2 weiterhin gezeigt, dass der Einfluss der Entnahme des Speisewassers 600, der durch den gestrichelten Alternativverlauf 31 dargestellt ist, Auswirkungen lediglich auf dem Temperaturbereich unterhalb des Pinch-Points 40 hat. Somit bleibt die Generierung von Frischdampf 400, für die hauptsächlich der Temperaturbereich oberhalb des Pinch-Points 40 relevant ist, durch die zusätzliche Maßnahme unberührt. Allerdings ist ersichtlich, dass im Vergleich zu dem Verlauf 30 ohne zusätzliche Entnahme des Speisewassers 600 an dem Zusatzdampf-Drosselventil 9 eine höhere Energiemenge ΔQ aus dem Rauchgas 300 entnommen werden kann. Somit wird ein größerer Anteil der Energie des Rauchgases 300 als im Stand der Technik genutzt, wodurch ein Wirkungsgrad des Kraftwerks 1 gegenüber dem Stand der Technik erhöht ist.

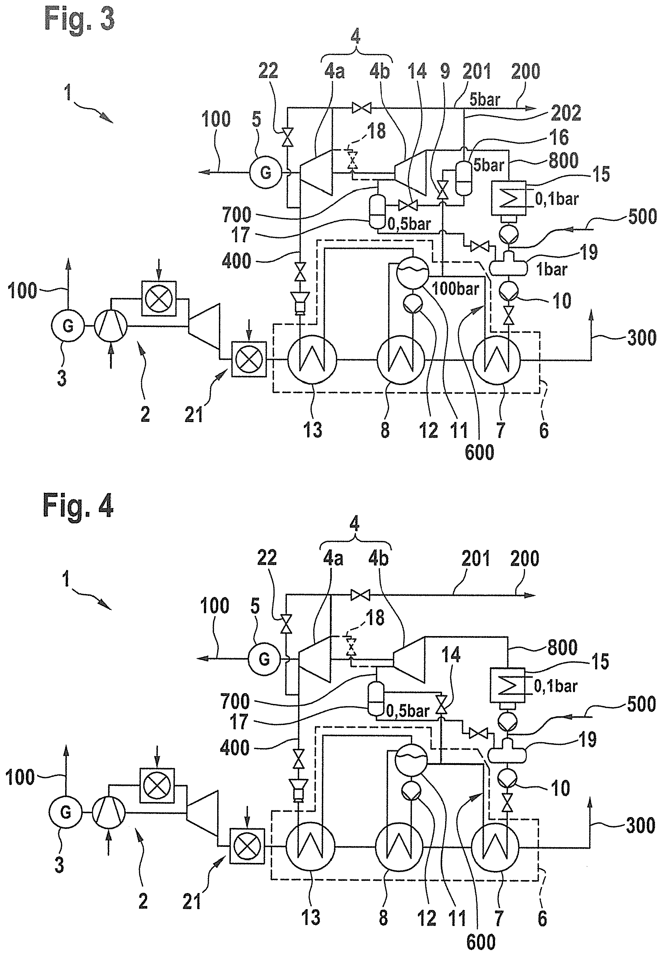

Fig. 3 zeigt ein zweites Ausführungsbeispiel der Erfindung. Das zweite Ausführungsbeispiel ist im Wesentlichen identisch zu dem ersten Ausführungsbeispiel, wobei im Unterschied zu dem ersten Ausführungsbeispiel die Dampfturbine 4 zweistufig ausgebildet ist. Daher ist vorgesehen, dass die erste Stufe 4a, insbesondere die Hochdruckstufe, mit dem Frischdampf 400 betrieben wird, wie dies im ersten Ausführungsbeispiel beschrieben wurde. Der so generierte Restdampf 201 ist wiederum mit dem Zusatzdampf 202 mischbar, um den Prozessdampf 200 bereitzustellen.

Die zweite Stufe 4b der Dampfturbine 4, insbesondere die Niederdruckstufe, wird durch einen Antriebsdampf 700 betrieben. Der Antriebsdampf 700 entsteht durch Entspannen des Restwassers, das in dem Zusatzdampf-Abscheidebehälter 16 aus dem Zusatzdampf 202 abgeschieden wurde. Besagtes Restwasser wird durch ein Antriebsdampf-Drosselventil 14 auf den Antriebsdampfdruck entspannt, der geringer ist als der Restdampfdruck. In dem in Fig. 3 gezeigten Ausführungsbeispiel beträgt dieser Antriebsdampfdruck 0,5 bar. Wiederum erfolgt ein Zuführen des Antriebsdampfs 700 zu einem Antriebsdampf-Abscheidebehälter 17, wodurch erneut Restwasser aus dem Antriebsdampf 700 abscheidbar ist. Das Restwasser aus dem Antriebsdampf-Abscheidebehälter 17 wird zurückgeführt und kann den Vorwärmer 7 erneut durchlaufen. Beispielsweise kann das Restwasser dem Entgaser 19 zugeführt werden. Dies erfolgt insbesondere dann wenn der Druck noch größer als 1 bar ist, ansonsten wird das Restwasser bevorzugt in den Kondensator 15 gegeben werden, da der Entgaser 19 vorteilhafterweise bei einem Druck von ca. 1 bar (absolut) betrieben wird.

Ein weiterer Unterschied ist in dem Bypass 18 vorgesehen, da der Bypass 18 den Ausgang der ersten Stufe 4a der Dampfturbine 4 nicht mit dem Kondensator 15, sondern mit dem Eingang der zweiten Stufe 4b der Dampfturbine 4 verbindet. Wird der Restdampf 201 nicht als Prozessdampf 200 benötigt, so kann dieser der zweiten Stufe 4b der Dampfturbine 4 zugeführt werden. Die zweite Stufe 4b der Dampfturbine 4 wandelt den zugeführten Dampf, insbesondere den Arbeitsdampf 700, zu Verlustdampf 800, der nicht weiter verwendet wird und direkt dem Kondensator 15 zugeführt wird.

In dem zweiten Ausführungsbeispiel erfolgt somit eine Verwendung einer zweistufigen Dampfturbine 4. Dabei bleibt das grundlegende Prinzip des Entnehmens von Speisewasser 600 gleich wie im ersten Ausführungsbeispiel. Es ist lediglich vorgesehen, dass die zweite Stufe 4b der Dampfturbine 4 mit Dampf 700 betrieben wird, der aus dem Restwasser des Zusatzdampfs 202 gewonnen wird. Da der Zusatzdampf 202 ein höheres Druckniveau aufweist als für das Betreiben der zweiten Stufe 4b notwendig ist, kann somit das Generieren des Arbeitsdampfs 700 einfach erfolgen, ohne dass hierzu der Restdampf 201 der ersten Stufe 4a verwendet werden muss. Mit anderen Worten wird das Restwasser aus dem Zusatzdampf 202 vor dem Rückführen wie in dem ersten Ausführungsbeispiel zum Antreiben der zweiten Stufe 4b der Dampfturbine 4 verwendet.

Fig. 4 zeigt ein weiteres Ausführungsbeispiel der Erfindung. Das Kraftwerk 1 gemäß einem dritten Ausführungsbeispiel, wie in Fig. 4 gezeigt, ist nahezu identisch dem Kraftwerk 1 gemäß dem zweiten Ausführungsbeispiel der Erfindung. Der einzige Unterschied besteht darin, dass der Antriebsdampf 700 nicht wie im zweiten Ausführungsbeispiel aus dem Restwasser des Zusatzdampfs 202 erzeugt wird, sondern direkt aus dem Speisewasser 600. Dazu ist anstelle des Zusatzdampf-Drosselventils 9 das Antriebsdampf-Drosselventil 14 mit einer Speisewasserleitung zwischen dem Vorwärmer 7 und der Dampftrommel 11 gekoppelt. Somit wird durch das Antriebsdampf-Drosselventil 14 Speisewasser 600 entnommen und durch Entspannung auf den Antriebsdampfdruck zu Antriebsdampf 700 gewandelt. Es ist der Antriebsdampf-Abscheidebehälter 17 vorhanden, durch den das Restwasser aus dem Antriebsdampf 700 abscheidbar ist. Weiterhin erfolgt eine Rückführung des Restwassers zu einem Eingang des Vorwärmers 7.

In dem dritten Ausführungsbeispiel entfällt das Generieren von Zusatzdampf 202. Somit ist der Prozessdampf 200 allein durch den Restdampf 201 gebildet. Da der Restdampf 201 nicht zum Antreiben der zweiten Stufe 4b der Dampfturbine 4 verwendet werden muss, da dies durch den Antriebsdampf 700 übernommen wird, ist wiederum die Menge an Prozessdampf 200 im Vergleich zum Stand der Technik maximiert. Somit weist auch das dritte Ausführungsbeispiel dieselben Vorteile auf, wie die vorhergehenden Ausführungsbeispiele.

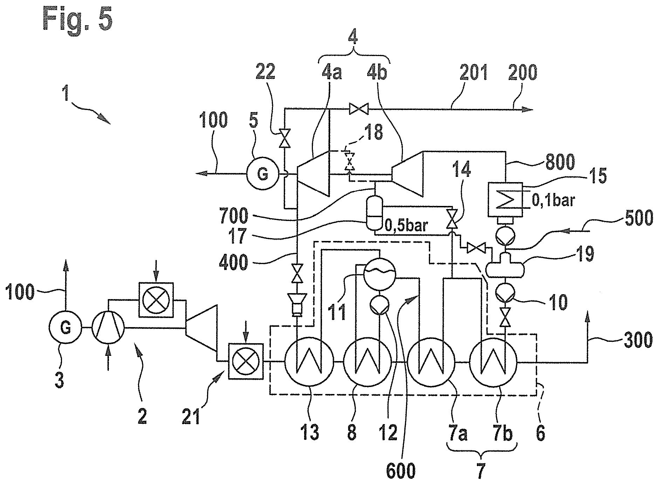

Schließlich zeigt Fig. 5 ein viertes Ausführungsbeispiel der Erfindung. Das vierte Ausführungsbeispiel ist nahezu identisch zu dem dritten Ausführungsbeispiel ein Unterschied lediglich in dem Vorwärmer 7 zu sehen. Der Vorwärmer 7 gemäß dem vierten Ausführungsbeispiel weist einen ersten Vorwärmbereich 7a und einen zweiten Vorwärmbereich 7b auf. Der erste Vorwärmbereich 7a und der zweite Vorwärmbereich 7b sind hintereinander geschaltet, wobei zwischen dem ersten Vorwärmbereich 7a und dem zweiten Vorwärmbereich 7b der Abgriff des Speisewassers 600 erfolgt, in dem das Speisewasser 600 durch das Antriebsdampf-Drosselventil 14 zu dem Antriebsdampf 700 entspannt wird. Der erste Vorwärmbereich 7a und der zweite Vorwärmbereich 7b können identisch ausgebildet sein, so dass ein Abzweigen von Speisewasser 600 genau in der Mitte des Vorwärmers 7 erfolgt. Alternativ kann der erste Vorwärmbereich 7a unterschiedlich zu dem zweiten Vorwärmbereich 7b ausgestaltet sein, um somit an beliebigen Stellen des Vorwärmers 7 das Speisewasser 600 abzuzweigen und durch das Antriebsdampf-Drosselventil 14 zu entspannen.

Das gezeigte vierte Ausführungsbeispiel lässt sich auch mit dem ersten Ausführungsbeispiel oder dem zweiten Ausführungsbeispiel kombinieren. Insbesondere kann der Vorwärmer 7 auch bei dem ersten Ausführungsbeispiel oder zweiten Ausführungsbeispiel in den ersten Vorwärmbereich 7a und dem zweiten Vorwärmbereich 7b aufgeteilt sein, wobei eine Entnahme des Speisewassers 600 durch das Zusatzdampfdrosselventil 9 zwischen den ersten Vorwärmbereich 7a und dem zweiten Vorwärmbereich 7b erfolgt.

Das erfindungsgemäße Konzept lässt sich auch auf Dampfturbinen 4 mit mehr als zwei Stufen anwenden. Auch in diesem Fall können die niedrigeren Stufen mit Dampf betrieben werden, der durch Entnahme und Entspannung von Speisewasser 600 an einer beliebigen Stelle des Vorwärmers 7 oder zwischen Vorwärmer 7 und Dampftrommel 11 gewonnen wurde.

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

### Bezugszeichenliste

- 1: Kraftwerk
- 2: Gasturbine
- 3: erster Generator
- 4: Dampfturbine
- 5: zweiter Generator
- 6: Abhitzedampferzeuger
- 7: Vorwärmer
- 8: Verdampfer
- 9: Zusatzdampf-Drosselventil
- 10: Speisewasserpumpvorrichtung
- 11: Dampftrommel
- 12: Förderpumpe
- 13: Überhitzer
- 14: Antriebsdampf-Drosselventil
- 15: Kondensator
- 16: Zusatzdampf-Abscheidebehälter
- 17: Antriebsdampf-Abscheidebehälter
- 18: Bypass
- 19: Entgaser
- 20: maximale Energie des Rauchgases
- 21: Zusatzfeuerung
- 22: Hochdruckumleitung
- 30: Verlauf des Prozesses im Kraftwerk
- 31: Alternativverlauf
- 40: Pinch-Point
- 100: elektrische Energie
- 200: Prozessdampf
- 201: Restdampf
- 202: Zusatzdampf
- 300: Rauchgas
- 400: Frischdampf
- 500: Frischwasser
- 600: Speisewasser
- 700: Antriebsdampf
- 800: Verlustdampf

## Patentansprüche

1. Kraftwerk (1) zur Generierung von elektrischer Energie (100) und Prozessdampf (200) umfassend
• eine Gasturbine (2) zum Antreiben eines ersten Generators (3) zum Generieren von elektrischer Energie (100) durch Verbrennung eines Brennstoffs zu Rauchgas (300),
• eine Dampfturbine (4) zum Antreiben eines zweiten Generators (5) zum Generieren von elektrischer Energie (100) umfassend eine erste Stufe (4a) zum Wandeln eines Frischdampfs (400) zu einem Restdampf (201), der zumindest einen Teil des Prozessdampfs (200) darstellt, und
• einen Abhitzedampferzeuger (6) zum Erzeugen des Frischdampfs (400) aus Frischwasser (500) mittels einer Abwärme des Rauchgases (300),
• wobei der Restdampf (201) einen Restdampfdruck aufweist, der geringer als ein Frischdampfdruck des Frischdampfs (400) ist,
• wobei der Abhitzedampferzeuger (6) einen Vorwärmer (7) zum Vorwärmen des Frischwassers (500) zu Speisewasser (600) und einen Verdampfer (8) zum Verdampfen des Speisewassers (600) zu dem Frischdampf (400) umfasst, und
• wobei das Speisewasser (600) einen Speisewasserdruck aufweist, der höher als der Restdampfdruck ist, und
• wobei ein Drosselventil (9, 14) zum Entspannen eines Teils des Speisewassers (600) entweder auf den Restdampfdruck zur Generierung eines Zusatzdampfes (202) oder auf einen Antriebsdampfdruck, der geringer als der Restdampfdruck ist, zur Generierung eines Antriebsdampfs (700) zum Betreiben einer zweiten Stufe (4b) der Dampfturbine (4) vorgesehen ist.

2. Kraftwerk (1) nach Anspruch 1, wobei das Drosselventil (9, 14) ein Zusatzdampf-Drosselventil (9) zum Entspannen des Teils des Speisewassers (600) auf den Restdampfdruck zur Generierung des Zusatzdampfes (202) ist, wobei der Zusatzdampf (202) mit dem Restdampf (201) zu dem Prozessdampf (200) mischbar ist.

3. Kraftwerk (1) nach Anspruch 2, wobei die Dampfturbine (4) eine zweite Stufe (4b) zum Wandeln eines Antriebsdampfs (700) zu einem Verlustdampf (800), der zum Kondensieren vorgesehen ist, umfasst, wobei der Antriebsdampf (700) durch Entspannen von Restwasser aus dem Zusatzdampf (202) an einem Antriebsdampf-Drosselventil (14) erzeugbar ist.

4. Kraftwerk (1) nach Anspruch 1, wobei die Dampfturbine eine zweite Stufe (4b) zum Wandeln des Antriebsdampf (700) zu einem Verlustdampf (800) umfasst,
• wobei das Drosselventil (9, 14) ein Antriebsdampf-Drosselventil (14) zum Entspannen des Teils des Speisewassers (600) auf den Antriebsdampfdruck zur Generierung des Antriebsdampfes (700) ist, und
• wobei der Restdampf (201) den gesamten Prozessdampf (200) darstellt.

5. Kraftwerk (1) nach einem der vorhergehenden Ansprüche, weiter umfassend eine Speisewasserpumpvorrichtung (10) zum Fördern von Frischwasser durch den Vorwärmer (7) und zum Generieren des Speisewasserdrucks.

6. Kraftwerk (1) nach einem der vorhergehenden Ansprüche, wobei der Abhitzedampferzeuger (6) eine Dampftrommel (11) zum Trennen von Frischdampf (400) und Speisewasser (600) aufweist, wobei aus der Dampftrommel (11) Frischdampf (400) der Dampfturbine (4) zuführbar ist und wobei zu der Dampftrommel (11) das Speisewasser (600) aus dem Vorwärmer (7) zuführbar ist.

7. Kraftwerk (1) nach Anspruch 5, wobei der Abhitzedampferzeuger (6) eine Förderpumpe (12) zum Fördern von Speisewasser (600) aus der Dampftrommel (11) durch den Verdampfer (8) zurück in die Dampftrommel (11) aufweist, um aus dem Speisewasser (600) Frischdampf (400) zu generieren.

8. Kraftwerk (1) nach einem der vorhergehenden Ansprüche, weiter umfassend einen Zusatzdampf-Abscheidebehälter (16) zum Abscheiden von Restwasser aus dem Zusatzdampf (202) und/oder einen Antriebsdampf-Abscheidebehälter (17) zum Abscheiden von Restwasser aus dem Antriebsdampf (700).

9. Kraftwerk (1) nach einem der vorhergehenden Ansprüche, weiter umfassend einen Bypass (18), über den Restdampf (201) von einem Ausgang der Dampfturbine (4) zu einem Kondensator (15) oder von einem Ausgang der ersten Stufe (4a) zu einem Eingang der zweiten Stufe (4b) überführbar ist.

10. Kraftwerk (1) nach einem der vorhergehenden Ansprüche, wobei das Drosselventil (9, 14) an einem Ausgang des Vorwärmers (7) angebracht ist, oder der Vorwärmer (7) einen ersten Vorwärmbereich (7a) und einen zweiten Vorwärmbereich (7b) aufweist, die hintereinander geschaltet sind, und zwischen denen das Drosselventil (9, 14) angebracht ist.

11. Kraftwerk (1) nach einem der vorhergehenden Ansprüche, weiter umfassend eine Zusatzfeuerung zum Erwärmen des Rauchgases (300) nach Austritt aus der Gasturbine (2) und/oder eine Hochdruckumleitung zum Umgehen der Dampfturbine (4) und Entspannen des Frischdampfs (400) auf den Restdampfdruck.

12. Kraftwerk (1) nach einem der vorhergehenden Ansprüche, wobei das Drosselventil (9, 14) eingerichtet ist, eine solche Menge an Speisewasser (600) zu entspannen, um eine vordefinierte Auskühlung des Rauchgases in allen Lastpunkten zu erreichen.

13. Kraftwerk (1) nach einem der Ansprüche 1 bis 11, wobei das Drosselventil (9, 14) eingerichtet ist, das Speisewasser (600) nur im Teillastbetrieb des Kraftwerks (1) zu entspannen.

## Claims

1. Power plant (1) for generating electrical energy (100) and process steam (200) comprising
• a gas turbine (2) for driving a first generator (3) for generating electrical energy (100) by burning a fuel to form flue gas (300),
• a steam turbine (4) for driving a second generator (5) for generating electrical energy (100) comprising a first stage (4a) for converting fresh steam (400) to form residual steam (201), which represents at least a portion of the process steam (200), and
• a heat recovery steam generator (6) for producing the fresh steam (400) from fresh water (500) by means of waste heat of the flue gas (300),
• wherein the residual steam (201) has a residual steam pressure which is lower than a fresh steam pressure of the fresh steam (400),
• wherein the heat recovery steam generator (6) comprises a preheater (7) for preheating the fresh water (500) to form feed water (600) and an evaporator (8) for evaporating the feed water (600) to form the fresh steam (400), and
• wherein the feed water (600) has a feed water pressure which is higher than the residual steam pressure, and
• wherein a throttle valve (9, 14) is provided for depressurizing a portion of the feed water (600) either to the residual steam pressure in order to generate an additional steam (202) or to a drive steam pressure, which is lower than the residual steam pressure, in order to generate a drive steam (700) for operating a second stage (4b) of the steam turbine (4).

2. Power plant (1) according to Claim 1, wherein the throttle valve (9, 14) is an additional steam throttle valve (9) for depressurizing the portion of the feed water (600) to the residual steam pressure in order to generate the additional steam (202), wherein the additional steam (202) can be mixed with the residual steam (201) in order to form the process steam (200).

3. Power plant (1) according to Claim 2, wherein the steam turbine (4) comprises a second stage (4b) for converting a drive steam (700) into a loss steam (800), which is provided for condensation, wherein the drive steam (700) can be generated by depressurizing residual water from the additional steam (202) at a drive steam throttle valve (14).

4. Power plant (1) according to Claim 1, wherein the steam turbine comprises a second stage (4b) for converting the drive steam (700) to a loss steam (800),
• wherein the throttle valve (9, 14) is a drive steam throttle valve (14) for depressurizing the portion of the feed water (600) to the drive steam pressure in order to generate the drive steam (700), and
• wherein the residual steam (201) represents the entire process steam (200).

5. Power plant (1) according to one of the preceding claims, further comprising a feed water pump device (10) for conveying fresh water through the preheater (7) and for generating the feed water pressure.

6. Power plant (1) according to one of the preceding claims, wherein the heat recovery steam generator (6) has a steam drum (11) for separating fresh steam (400) and feed water (600), wherein from the steam drum (11) fresh steam (400) can be supplied to the steam turbine (4) and wherein the feed water (600) from the preheater (7) can be supplied to the steam drum (11).

7. Power plant (1) according to Claim 5, wherein the heat recovery steam generator (6) comprises a conveyor pump (12) for conveying feed water (600) from the steam drum (11) through the evaporator (8) back into the steam drum (11) in order to generate fresh steam (400) from the feed water (600).

8. Power plant (1) according to one of the preceding claims, further comprising an additional steam separation container (16) for separating residual water from the additional steam (202) and/or a drive steam separation container (17) for separating residual water from the drive steam (700).

9. Power plant (1) according to one of the preceding claims, further comprising a bypass (18), via which the residual steam (201) can be transferred from an output of the steam turbine (4) to a condenser (15) or from an output of the first stage (4a) to an input of the second stage (4b).

10. Power plant (1) according to one of the preceding claims, wherein the throttle valve (9, 14) is fitted to an output of the preheater (7), or the preheater (7) has a first preheating region (7a) and a second preheating region (7b) which are arranged one behind the other and between which the throttle valve (9, 14) is fitted.

11. Power plant (1) according to one of the preceding claims, further comprising an additional firing for heating the flue gas (300) after discharge from the gas turbine (2) and/or a high-pressure bypass for bypassing the steam turbine (4) and depressurizing the fresh steam (400) to the residual steam pressure.

12. Power plant (1) according to one of the preceding claims, wherein the throttle valve (9, 14) is configured to depressurize such a quantity of feed water (600) in order to achieve a predefined cooling of the flue gas at all load locations.

13. Power plant (1) according to one of Claims 1 to 11, wherein the throttle valve (9, 14) is configured to depressurize the feed water (600) only in part-load operation of the power plant (1).

## Revendications

1. Centrale électrique (1) destinée à produire de l'énergie électrique (100) et de la vapeur de processus (200), ladite centrale électrique comprenant
• une turbine à gaz (2) destinée à entraîner un premier générateur (3) destiné à générer de l'énergie électrique (100) en brûlant un combustible qui va former du gaz de combustion (300),
• une turbine à vapeur (4) destinée à entraîner un deuxième générateur (5), destiné à générer de l'énergie électrique (100), et comprenant un premier étage (4a) de conversion de la vapeur vive (400) en vapeur résiduelle (201) qui représente au moins une partie de la vapeur de processus (200),
• un générateur de vapeur à récupération de chaleur (6) destiné à générer la vapeur vive (400) à partir d'eau fraîche (500) en utilisant la chaleur perdue du gaz de combustion (300),
• la vapeur résiduelle (201) ayant une pression de vapeur résiduelle qui est inférieure à une pression de vapeur vive de la vapeur vive (400),
• le générateur de vapeur à récupération de chaleur (6) comprenant un préchauffeur (7) destiné à préchauffer l'eau fraîche (500) en eau d'alimentation (600) et un évaporateur (8) destiné à évaporer l'eau d'alimentation (600) pour former de la vapeur vive (400), et
• l'eau d'alimentation (600) ayant une pression d'eau d'alimentation qui est supérieure à la pression de vapeur résiduelle, et
• une soupape d'étranglement (9, 14) à détendre une partie de l'eau d'alimentation (600) soit à la pression de vapeur résiduelle pour générer une vapeur supplémentaire (202) soit à une pression de vapeur motrice qui est inférieure à la pression de vapeur résiduelle pour générer une vapeur motrice (700) destinée à faire fonctionner un deuxième étage (4b) de la turbine à vapeur (4).

2. Centrale électrique (1) selon la revendication 1, la soupape d'étranglement (9, 14) étant une soupape d'étranglement de vapeur supplémentaire (9) destinée à détendre une partie de l'eau d'alimentation (600) à la pression de vapeur résiduelle destinée à générer la vapeur supplémentaire (202), la vapeur supplémentaire (202) étant miscible à la vapeur résiduelle (201) pour former la vapeur de processus (200).

3. Centrale électrique (1) selon la revendication 2, la turbine à vapeur (4) comprenant un deuxième étage (4b) de conversion de la vapeur motrice (700) en vapeur perdue (800) qui est destinée à se condenser, la vapeur motrice (700) pouvant être générée par détente de l'eau résiduelle de la vapeur supplémentaire (202) au niveau d'une soupape d'étranglement de vapeur motrice (14).

4. Centrale électrique (1) selon la revendication 1, la turbine à vapeur comprenant un deuxième étage (4b) de conversion de la vapeur motrice (700) en une vapeur perdue (800),
• la soupape d'étranglement (9, 14) étant une soupape d'étranglement de vapeur motrice (14) destinée à détendre une partie de l'eau d'alimentation (600) à la pression de vapeur motrice afin de générer la vapeur motrice (700), et
• la vapeur résiduelle (201) représentant la totalité de la vapeur de processus (200).

5. Centrale électrique (1) selon l'une des revendications précédentes, comprenant en outre un dispositif de pompage d'eau d'alimentation (10) destiné à pomper de l'eau fraîche à travers le préchauffeur (7) et à générer la pression d'eau d'alimentation.

6. Centrale électrique (1) selon l'une des revendications précédentes, le générateur de vapeur à récupération de chaleur (6) comportant un tambour à vapeur (11) destiné à séparer la vapeur vive (400) et l'eau d'alimentation (600), la vapeur vive (400) pouvant être amenée du tambour à vapeur (11) à la turbine à vapeur (4) et l'eau d'alimentation (600) pouvant être amenée du préchauffeur (7) au tambour à vapeur (11).

7. Centrale électrique (1) selon la revendication 5, le générateur de vapeur à récupération de chaleur (6) comprenant une pompe de transport (12) destinée à ramener l'eau d'alimentation (600) du tambour à vapeur (11) à travers l'évaporateur (8) jusque dans le tambour à vapeur (11) afin de générer de la vapeur vive (400) à partir de l'eau d'alimentation (600).

8. Centrale électrique (1) selon l'une des revendications précédentes, comprenant en outre un réservoir de séparation de vapeur supplémentaire (16) destiné à séparer l'eau résiduelle de la vapeur supplémentaire (202) et/ou un réservoir de séparation de vapeur motrice (17) destiné à séparer l'eau résiduelle de la vapeur motrice (700).

9. Centrale électrique (1) selon l'une des revendications précédentes, comprenant en outre une dérivation (18) par laquelle la vapeur résiduelle (201) peut être transférée d'une sortie de la turbine à vapeur (4) à un condenseur (15) ou d'une sortie du premier étage (4a) à une entrée du deuxième étage (4b).

10. Centrale électrique (1) selon l'une des revendications précédentes, la soupape d'étranglement (9, 14) étant fixée à une sortie du préchauffeur (7), ou le préchauffeur (7) comportant une première zone de préchauffage (7a) et une deuxième zone de préchauffage (7b) qui sont montées en série, et entre lesquelles la soupape d'étranglement (9, 14) est fixée.

11. Centrale électrique (1) selon l'une des revendications précédentes, comprenant en outre un chauffage supplémentaire destiné à chauffer le gaz de combustion (300) après la sortie de la turbine à gaz (2) et/ou une dérivation à haute pression destinée à contourner la turbine à vapeur (4) et à détendre la vapeur vive (400) à la pression de vapeur résiduelle.

12. Centrale électrique (1) selon l'une des revendications précédentes, la soupape d'étranglement (9, 14) étant conçue pour détendre une quantité d'eau d'alimentation (600) nécessaire pour réaliser un refroidissement prédéfini du gaz de combustion à tous les points de charge.

13. Centrale (1) selon l'une des revendications 1 à 11, la soupape d'étrangement (9, 14) étant conçue pour détendre l'eau d'alimentation (600) uniquement en fonctionnement à charge partielle de la centrale (1).
